# EUROPEAN PATENT APPLICATION

(11) **EP 2 826 704 A2**
(43) Date of publication of application: **21.01.2015**
(21) Application number: 14176751.7
(22) Date of filing: 11.07.2014
(51) Int. Cl.: B63B 23/34

(54) **Multi-stage watertight chamber**

(30) Priority: 11.07.2013 TW 102213089 U
(71) Applicant: Kang, Chien-Chung, New Taipei City 24248 (TW)
(72) Inventor: Kang, Chien-Chung, New Taipei City 24248 (TW)
(74) Representative: Chaillot, Geneviève

(57) **Abstract**

A multi-stage watertight chamber is provided in this invention. The multi-stage watertight chamber comprises a first rotary seal, a second rotary seal, a first housing, a second housing, and an integrated shaft. The first and second rotary seals withstand external pressure to make sure watertight status is achieved when the integrated shaft rotates. The first housing forms a first watertight chamber. The integrated shaft protrudes through the first housing via the first rotary seal. The second housing is placed outside and adjacent to the first housing and forms a second watertight chamber. The first watertight chamber contains devices that must be isolated from liquid outside the first and second housings. The second watertight chamber is used to store water seeped through the second rotary seal and avoid causing damage directly to components and apparatus inside the first watertight chamber.

## Description

### BACKGROUND OF THE INVENTION

### Field of the Invention

The present invention relates to a multi-stage watertight chamber. More particularly, the present invention relates to a multi-stage watertight chamber that can store leaked-in water in one watertight chamber, and prevent damage to devices installed inside another watertight chamber.

### Descriptions of the Related Art

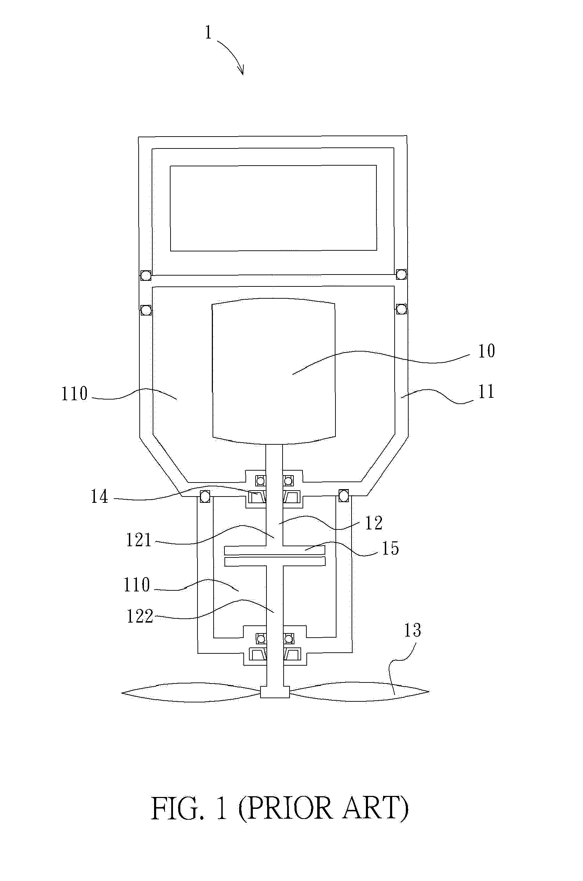

**FIG** 1 illustrates a waterproof structure **1** being applied to a shaft of motor equipment or apparatus in deep-water. The motor **10** must be protected inside the housing **11. A shaft 12** protrudes through the housing **11** to drive a load, such as a propeller **13.** It is difficult to prevent the high pressure liquid outside the waterproof structure **1** from seeping in because the shaft **12** is usually rotating at high speed. Therefore, a rotary seal **14** is disposed at a position where the shaft **12** protrudes through the housing **11** to make sure waterproof status is achieved when the shaft **12** rotates. However, pressurized liquid in deep water could still leak into the housing **11** and cause damage to the equipment or apparatus installed in the housing **11** providing any flaw present with the rotary seal **14.** The shaft length is long and requires the shaft **12** to be separated into a motor shaft **121** coupled to the motor **10** and a propeller shaft **122** coupled to the propeller **13.** A clutch **15** is then coupled to the motor shaft **121** and the propeller shaft **122** to ensure the smooth turning of the shaft **12.**

Besides, the user can only determine whether liquid is leaking into the housing **11** by disassembling the housing **11** for inspection. In addition, internal space is required inside the housing **11** to store liquid leaked into the housing **11.** Said space can also be equipped with an electrical water ingress sensing means to detect early sign of water ingress in an effort to prevent damage of motor **10** or other equipment from excessive liquid accumulation. However, without a mean to visually verify the severity of the water ingress situation and a quick way to remove the accumulated liquid inside, it then requires relatively large space in the housing **11** to store water seepage until they can be removed. In this case, a risk of damage to the equipment or apparatus in the housing **11** by liquid and its vapor cannot be under estimated.

### SUMMARY OF THE INVENTION

An objective of the present invention is to provide a multi-stage watertight chamber **2,** which comprises a first housing **20,** an integrated shaft **22,** a first rotary seal **202,** a second housing **21,** and a second rotary seal **212.** The first housing **20** forms a first watertight chamber **201** to house components and equipment that needs to be isolated from fluid outside the housing. The second housing **21** forms a second watertight chamber **211** for storing water seepage from second rotary seal **212** and prevent damage to the components and equipment in the first watertight chamber **201.**

The detailed technology and preferred embodiments implemented for the subject invention are described in the following paragraphs accompanying the appended drawings for people skilled in this field to well appreciate the features of the claimed invention.

### BRIEF DESCRIPTION OF THE DRAWINGS

**FIG 1** is a schematic view of a waterproof structure of the prior art;
**FIG 2** is a schematic view of a first embodiment of a multi-stage watertight chamber;
**FIG 3** is a partial enlarged view of a cover, a first housing, and a second housing of **FIG 2**; ,
**FIG 4** is a schematic view of a drain port of a multi-stage watertight chamber;
**FIG 5** is a schematic view of a vent port of a multi-stage watertight chamber;
**FIG 6** is an isometric view of a multi-stage watertight chamber;
**FIG 7** is a partial enlarged view of an inflow sensing device of **FIG 2**;
**FIG 8** is a schematic view of an one-way valve and a drain hole of the drain port of a multi-stage watertight chamber; and
**FIG 9** is a schematic view of a second embodiment of a multi-stage watertight chamber.

### DESCRIPTION OF THE PREFERRED EMBODIMENT

This invention, the multi-stage watertight chamber for an integrated shaft, provides a second watertight chamber formed adjacent to the first housings. The purpose of the second watertight chamber is to store water seepage preventing damage to devices installed in the first watertight chamber when rotary seals in either chamber starts to lose its ability to seal.

In the following description, this invention will be explained with reference to embodiments thereof. However, the description of these embodiments is only for purposes of illustration rather than limitation. It should be appreciated that in the following embodiments and attached drawings, elements unrelated to this invention are omitted from depictions; and dimensional relationships among individual elements in the attached drawings are illustrated only for ease of understanding, but not to limit the actual scale.

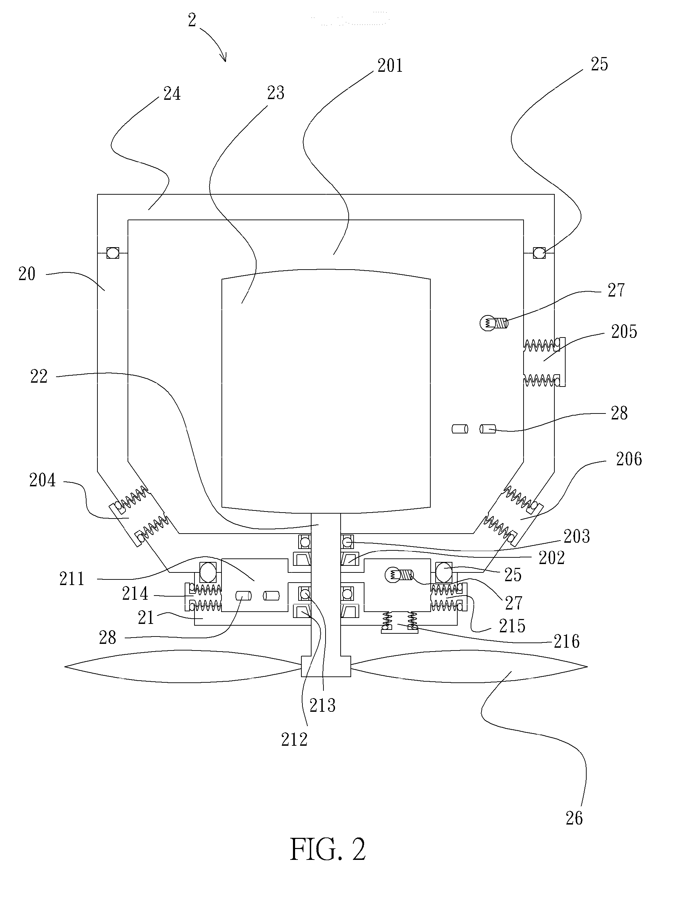

Referring to **FIG 2**, a multi-stage watertight chamber **2** in the first embodiment includes a first housing **20,** an integrated shaft **22,** a first rotary seal **202,** a second housing **21,** and a second rotary seal **212.** The integrated shaft **22** is a one single piece integrated shaft that might rotate at a range from zero to high speed. Said integrated shaft **22** can also slide axially. The rotary seal **202** and rotary seal **212** are usually made of elastomer that can be compressed to withstand the external pressure while the integrated shaft turns or slides. Many types, shapes and sizes are commercially available for different turning or sliding speed. The first housing **20** comes with a cover **24.** Said cover **24** achieves a watertight seal with the first housing **20** by compressing an elastomer **25** with mechanical means, such as screw or latch, and forms a first watertight chamber **201.** Said first watertight chamber **201** is used to house component, devices, or equipment that must be isolated from liquid outside the first housing **20** and the second housing **21.** The integrated shaft **22** protrudes through the first housing **20** and the second housing **21** and couples with a rotating part, such as a propeller **26.** The second housing **21** is placed on the outside of the first housing **20.** Said second housing **21** achieves an watertight seal with the first housing **20** also by compressing an elastomer **25** with mechanical means, such as screw or latch, and forms a second watertight chamber **211.** Said second chamber **211** is used to store water seeped through the second rotary seal **212** and avoid causing damage directly to components inside the first watertight chamber **201.** Such set up is to provide multi-stage watertight means for the integrated shaft **22** operating in pressurized liquid environment. Examples of waterproofing needing in pressurized liquid environment include machinery in deep sea or equipment exposed to the elements in outdoor environment. In the first embodiment, a motor **23** inside the first housing **20** drives the integrated shaft **22,** which then drive a rotating part, such as the propeller **26,** outside the second housing **21.** For example, motorized equipment with the integrated shaft **22** operating in deep sea can utilize the second chamber **211** to store sea water seeped in and avoid causing damage to the motor **23** and other components in the first chamber **201.**

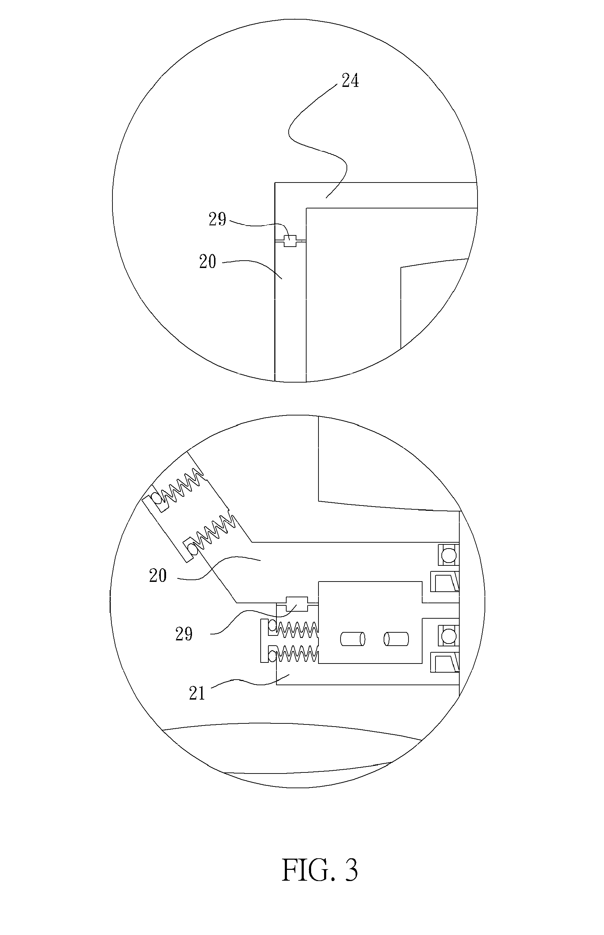

Referring to **FIG 3****,** the cover **24** can also be tightly sealed against the first housing **20** by directly applying elastomer gel **29** onto the contact surface and fastened by mechanical means. The watertight seal between the second housing **21** and the first housing **20** can also be done in similar fashion.

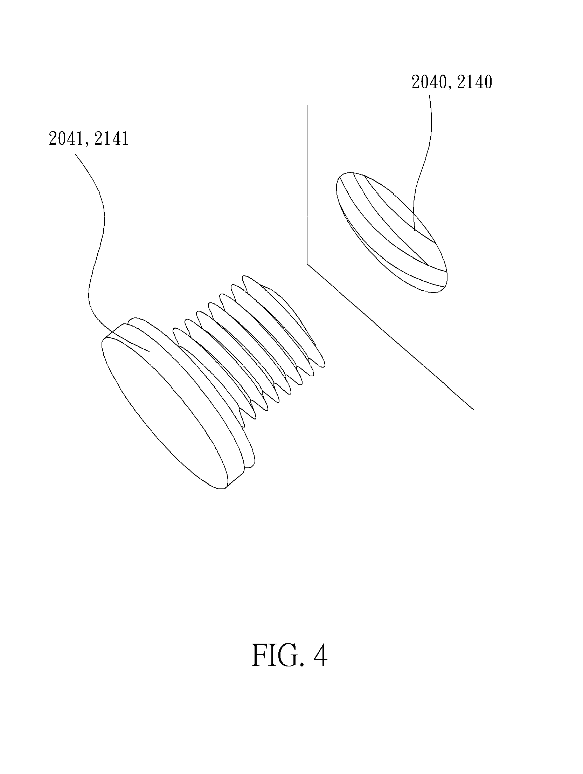

Referring to **FIG** 2 and **FIG 4****,** the main purpose of the first watertight chamber **201** formed inside the first housing **20** and the cover **24** is to house components, devices, or equipment that must be isolated from fluid outside. A first drain port **204** is installed on the first housing **20** to allow seeped-in fluid, such as seawater, to be drained. To drain the accumulated fluid from the first watertight chamber **201,** first remove a first drain plug **2041** from a first drain hole **2040.** Secondly, tilt the first watertight chamber **20** until the accumulated fluid flow toward and drain out from the first drain port **204.**

The main purpose of the second watertight chamber **211** formed between the second housing **21** and the first housing **20** is to store water seeped through the second rotary seal **212.** A second drain port **214** is installed on the second housing **21** to allow seeped-in fluid, such as seawater, to be drained. To drain the accumulated fluid from the second watertight chamber **211,** first remove a second drain plug **2141** from a second drain hole **2140.** Secondly, tilt the second watertight chamber **21** until the accumulated fluid flow toward and drain out from the second drain port **214.**

Besides, a first air pumping valve **206** or a second air pumping valve **216** can be installed to help expel the seeped-in fluid out by pumping air into the first watertight chamber **201** or the second watertight chamber **211.** By increasing air pressure inside the first watertight chamber **201** or the second watertight chamber **211,** the pressure difference between the first watertight chamber **201** and second watertight chamber 211 and outside environment can be decreased to subsequently reduce the chance for the pressurized liquid to seep in from outside. After draining the fluid, the first drain plug **2041** or the second drain plug **2141** can be reinstalled, and the second watertight chamber **211** can then be used again to store fluid that seeped in. The second drain port **214,** the second drain plug **2141,** and the second drain hole **2140** are similar in design as the first drain port **204,** the first drain plug **2041,** and the first drain hole **2040** shown in **FIG** 4.

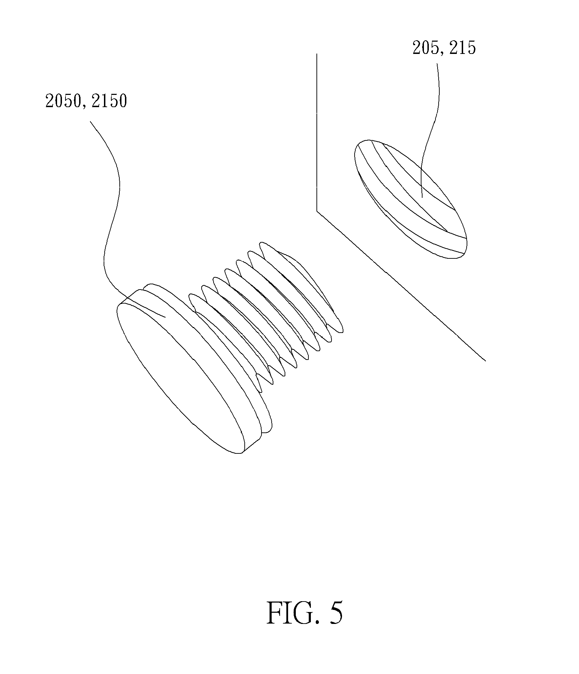

Referring to **FIG 2** and **FIG 5****,** a first vent port **205** and a second vent port **215** can be respectively placed on the first housing **20** and the second housing **21** to provide passage way for air to enter allowing accumulated water to be drained with ease. A first vent plug **2050** and a second vent plug **2150** are respectively set up on the first vent port **205** and the second vent port **215** to allow air passage when opened and to maintain watertight when plugged. A one way valve can also be installed on the first vent port **205** or the second vent port **215** to avoid air from escaping from the vent port and thus reduce the water draining efficiency.

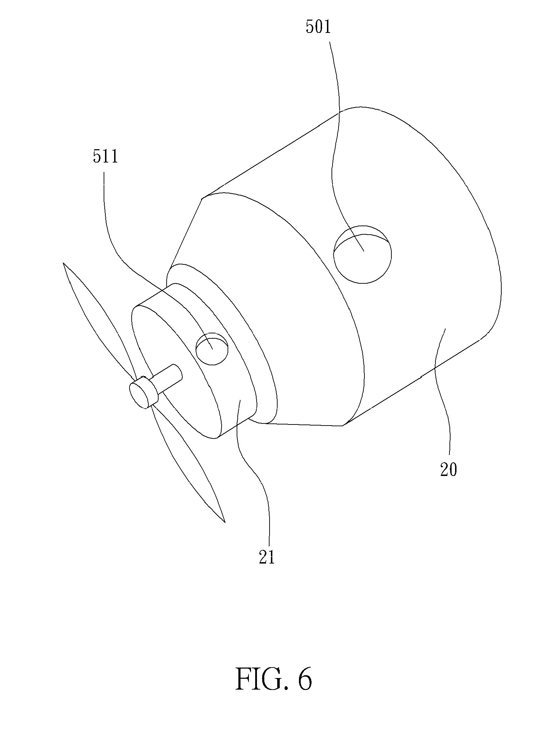

Referring to **FIG 6****,** at least part of the first housing **20** or the second housing **21** can be a transparent part **501, 511** that provides a view port for the user allowing visual inspection to determine whether any water accumulated inside the first housing **20** or the second housing **21.** For example, a diver underwater can perform visual inspection to detect early sign of water ingress as well as to see if accumulated water volume requires removal.

Referring to **FIG 2****,** an illumination light **27** can be installed inside the first watertight chamber **201** or the second watertight chamber **211.** This serves to light up the internal space and provide reflection glare from accumulated water. The illumination can help the user to visually identify sign of water ingress.

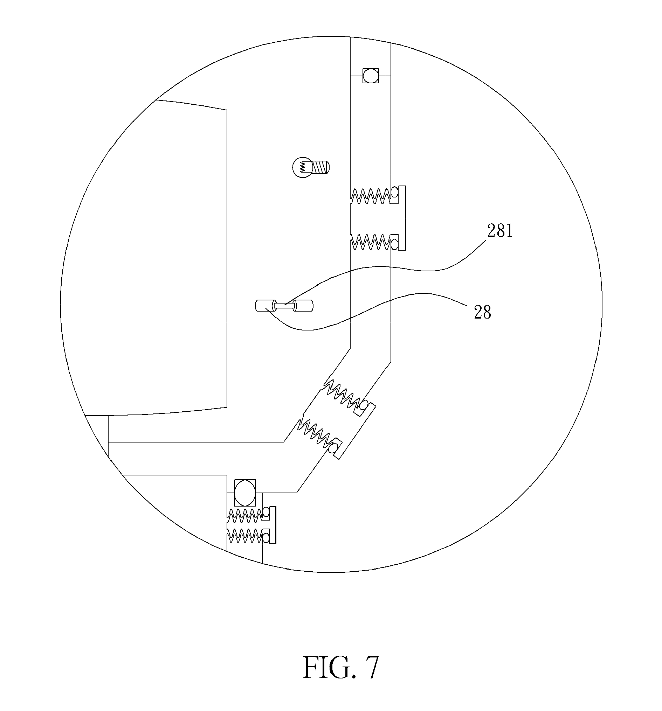

Referring to **FIG 2** and **FIG 7****,** a water ingress sensor **28** can be installed inside the first watertight chamber **201** or the second watertight chamber **211** to electronically detect water ingress. The water ingress sensor **28** consists of two conductor terminals adjacent but not contacting each other which form a closed loop when water exist between two conductor terminals. Water absorbent material **281** can be added onto two conductor terminals to absorb water and increase detection efficacy on minute amount of water.

Referring to **FIG 2****,** a first position restrainer **203** can be placed near the rotary seal 202 to align the integrated shaft **22** with the first rotary seal **202.** A second position restrainer **213** can also be placed near the rotary seal **212** to align the integrated shaft **22** with the second rotary seal **212.** The first position restrainer **203** or the second position restrainer **213** can be a bearing or a shaft sleeve.

Referring to **FIG** 2, the gap between first housing **20** and the second housing **21** can be reduced to a smaller gap only wide enough to allow seeped-in water to pass through and eventually accumulate in the second watertight chamber **211.** By doing so, the length of the integrated shaft **22** can be greatly reduced. The length reduction make an one single piece integrated shaft practical instead of having to use two separate shaft pieces coupled together.

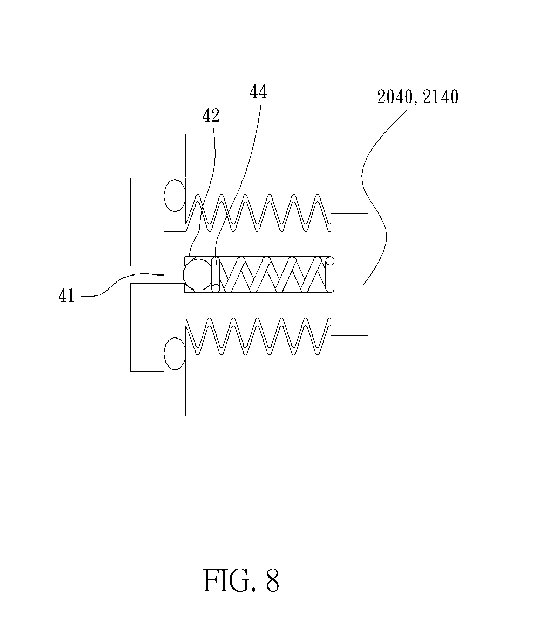

Referring to **FIG** 2, **FIG** 4, and **FIG 8****,** the drain hole **2040, 2140** can also be fitted with an one-way valve **41.** An elastomer **42,** such as an o-ring, is placed on a contact surface between the one-way valve **41** and the drain hole **2040, 2140.** The elastomer **42** is then compressed by a spring **44** to form an watertight seal between the one-way valve **41** and the drain hole **2040, 2140.** To drain water by forcing air in through the one-way valve **41,** the one-way valve **41** can be unscrewed slightly in advance to break the seal. Tilt the first housing **20** or the second housing **21** to allow the accumulated water to flow toward the first drain port **204** or the second drain port **214.** The high pressure gas influx will propel water out through the port with ease.

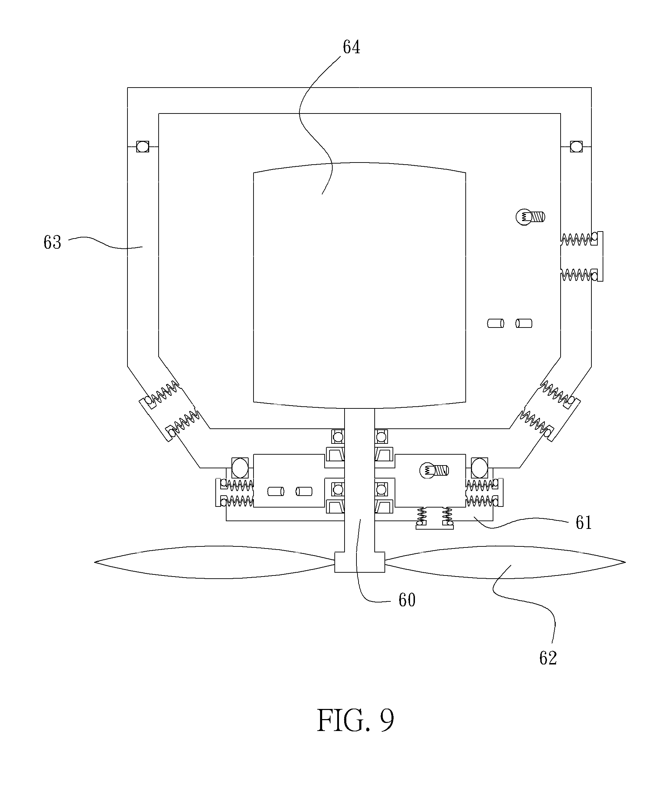

Referring to **FIG 9****,** in the second embodiment of the invention, an integrated shaft **60** that protrudes through a first housing **63** and a second housing **61** can be driven by a rotating part, such as a propeller **62,** outside the second housing **61.** The integrated shaft **60** can then subsequently drive a generator **64.**

The above embodiments merely give the detailed technical contents of the present invention and inventive features thereof, and are not to limit the covered range of the present invention. People skilled in this field may proceed with a variety of modifications and replacements based on the disclosures and suggestions of the invention as described without departing from the characteristics thereof. Nevertheless, although such modifications and replacements are not fully disclosed in the above descriptions, they have substantially been covered in the following claims as appended.

## Claims

1. A multi-stage watertight chamber, comprising:
a first rotary seal;
a second rotary seal;
a first housing, being configured for forming a first watertight chamber, wherein the first watertight chamber is configured for installing devices isolated from liquid outside the multi-stage watertight chamber;
a second housing, placed outside of the first housing, being configured for forming a second watertight chamber with the first housing, wherein the second watertight chamber is configured for storing water seeped through the second rotary seal and avoiding causing damage directly to devices inside the first watertight chamber; and
an integrated shaft protruding through the first housing via the first rotary seal,
wherein the first and second rotary seals are configured to withstand liquid pressure to make sure watertight status is achieved when the integrated shaft rotates or slides axially.

2. The multi-stage watertight chamber as claimed in claim 1, wherein one of the first and second housings comprises a drain port being configured to allow seeped-in fluid inside one of the first and second watertight chambers to be drained through.

3. The multi-stage watertight chamber as claimed in claim 1, wherein one of the first and second housings comprises a drain port and an air pumping valve, and the air pumping valve is configured to increase air pressure inside one of the first and second watertight chambers to help expel seeped-in fluid inside one of the first and second watertight chambers through the drain port.

4. The multi-stage watertight chamber as claimed in claim 1, wherein at least part of one of the first and second housings is transparent, allowing visual inspection to determine whether fluid accumulated inside one of the first and second watertight chambers.

5. The multi-stage watertight chamber as claimed in claim 1, wherein one of the first and second watertight chambers comprises a water ingress sensor, consisting of two conductor terminals adjacent but not contacting each other, being configured to form a closed loop when water exists between the two conductor terminals.

6. The multi-stage watertight chamber as claimed in claim 1, wherein one of the first and second watertight chambers comprises an illumination light, and the illumination light is configured to illuminate one of the first and second watertight chambers for visual inspection of water existence.

7. The multi-stage watertight chamber as claimed in claim 1, wherein one of the first and second housings comprises a vent port, and the vent port is configured to let air in and allow accumulated water inside one of the first and second watertight chambers to be drained with ease.

8. The multi-stage watertight chamber as claimed in claim 1, wherein the integrated shaft is driven by a motor inside the first watertight chamber to drive a rotating part.

9. The multi-stage watertight chamber as claimed in claim 1, wherein the integrated shaft is driven by a rotating part outside the second housing to drive a generator inside the first watertight chamber.

10. The multi-stage watertight chamber as claimed in claim 8 or claim 9, wherein the rotating part is a propeller.

11. The multi-stage watertight chamber as claimed in claim 1, wherein the first housing comprises a position restrainer, installed at where the integrated shaft protrudes through the first housing, being configured to align the integrated shaft with the first rotary seal to make sure watertight status of the first rotary seal is achieved.

12. The multi-stage watertight chamber as claimed in claim 1, wherein the integrated shaft protrudes through the second housing via the second rotary seal, and the second housing comprises a position restrainer, installed where the integrated shaft protrudes through the second housing, being configured to align the integrated shaft with the second rotary seal to make sure watertight status of the second rotary seal is achieved.

13. The multi-stage watertight chamber as claimed in claim 11 or claim 12, wherein the position restrainer is one of a bearing and a shaft sleeve.
